# EUROPEAN PATENT SPECIFICATION

(11) **EP 0 693 198 B1**
(45) Date of publication and mention of the grant of the patent: **16.08.2001**
(21) Application number: 94912133.9
(22) Date of filing: 31.03.1994
(51) Int. Cl.: G06F 3/147, G06K 17/00, G09F 3/20

(54) **SYSTEM FOR ELECTRONIC PRICE LABELS**
SYSTEM FÜR ELEKTRONISCHE PREISSCHILDER
SYSTEME POUR ETIQUETTES DE PRIX ELECTRONIQUES

(30) Priority: 05.04.1993 SE 9301126
(43) Date of publication of application: 24.01.1996
(73) Proprietor: Pricer AB, 754 51 Uppsala (SE)
(72) Inventor: AHLM, Roger, S-591 46 Motala (SE)
(74) Representative: Svanfeldt, Hans-Ake
(86) International application number: SE9400298
(87) International publication number: WO9423381

(56) References cited:
- EP-A- 0 456 462
- GB-A- 2 240 416
- SE-B- 461 690
- US-A- 4 500 880

## Description

### TECHNICAL FIELD

The present invention relates to electronic price labels and more exactly to a system for fetching necessary addressing information from a label or a corresponding item which presents the static information stating the unit property by optically scanning the desired information.

### BACKGROUND OF THE INVENTION

Within the trade of everyday commodities there is a need of transferring information from a central data base to the edges of the shelves where related to the information the articles are situated. This will be performed e.g. to inform the customers moving around in the shop about the present price of a merchandise. This may as well be involving information directed to the staff working in the shop.

Today most systems having electronic price labels utilize a display (normally a LCD) for the information frequently changed, e.g. the price, and a printed or a laser printer produced paper label for the information changed less frequently. There are systems using a display for all information but those are not related to the present system, but are incorporated under a patent SE 441 477 or U.S. Patent No. 4,002,886.

In the present systems of shelf edge information of today is utilized an electrically "programmable"/exchangeable memory (U.S. Patent No. 4,002,886) or more sophisticated via the medium reprogrammable register (Patent SE 441,477) to make each display unique. GB 2240416 teacher the use of a manual bar code reader wand to input an address code read from an item of marchandise into a display unit. This is in principal not necessary if the shelf display instead will be provided with a means for reading a unique address via an article number written or printed on a label provided at each display.

Therefore there is a demand of a system for a direct sensing of a label as an alternative manner of transferring information to be displayed by a separate remote unit. All relevant information may then be transferred to all units without the use of any specific address and the selection of information to be visualized will take place within the display when a chosen label is applied. This may be used as a non-address system for transferring information to the shelf edges from a central dataprocessor.

### SUMMARY OF THE INVENTION

A method according to the invention is set out in Claim 1, an electronic price unit according to the invention is specified in Claim 4 and a system according to the invention is claimed in Claim 8.

Embodiments of the invention are set out in the dependent claims.

### BRIEF DESCRIPTION OF THE DRAWINGS

The invention, together with further objects and advantages thereof, may best be understood by making reference to the following description taken together with the accompanying drawings, in which:

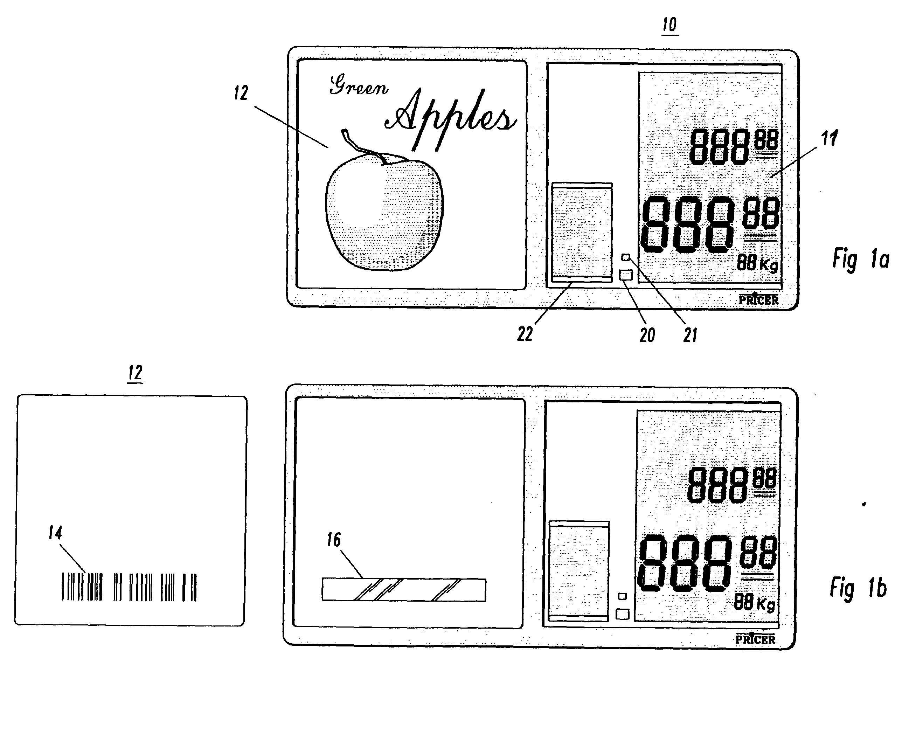

- Fig. 1a: is a front view of an embodiment of a display according to the present invention,
- Fig. 1b: demonstrates the static information code at the back of the optional picture label and a corresponding bar code reader in the display unit.

### DESCRIPTION OF AN ILLUSTRATIVE EMBODIMENT

Below will be described a concrete example:

A shop may be provided with a number of shelf edge displays, price boards and other devices working according to already disclosed principles having up to a number of about 5000 units. This corresponds to the number of articles in a normal supermarket. Certain of the electronic price labels are provided with a given address according to the state of the art and those will be addressed and updated on a regular basis. But to at least some units will be transferred at one or several determined occasions all of or part of the information in the price data-base on a differently addressed basis. An embodiment of such a unit 10 containing a label 12 having a static information 14 is demonstrated in Fig. la and 1b. The information may for example be transferred in a form:
<article no 1><price la><price 1b><price lc><article no 2><price 2a><price 2b><price 2c>....<stop>
or in an alternatively compressed form:
<database start><price la><price 1b><price lc><price 2a><price 2b><price 2c>....<stop>
or a further variant:
<database start><weight 1><weight 2>...<stop weight><discount 1><discount 2>...<stop discount><price 1><price 2>....<stop>

The important thing is that all of or a major part of the database will be transferred in some defined and compressed form to certain of the units present.

Above alternative one will get for instance the size of a transfer (if 13 digit article numbers are used): (40 + 20 + 20 + 20 x 5000 = 500 000 data bits. That adds up to 50 seconds when transmitting at 10 000 bits/second.

Alternative two above correspondingly will be 8 + (20 + 20 + 20) x 5000 =~ 300 000 data bits. This adds up to 30 seconds of transfer time having the same transmission rate.

Above alternative three correspondingly will be 8 + n x 20 + 8 + m x 20 + 5000 =~ 100 000 if n and m. This will be 10 seconds having the previous transmission rate.

After that the whole data-base or a selected portion of the data-base has been transferred, each such price marking unit is containing the necessary information. To select which information to be visualized by a display 11, preferably a LCD, the unit 10 is provided with a label 12 stating the type of merchandise by a text or a picture or a combination of text and picture. If for example the price of green apples is to be displayed a label showing a green apple may be used. On the back side of this label there is a printed bar code 14, using for example a so called EAN-code. This printed bar code will coincide with a bar code reader 16 of the actual unit 10 and the bar code read will tell the unit in this case that it is supposed to display available information of green apples. According to the address or article information 14 regularly read off the back of the applied label 12 the proper data will then be fetched out of the information previously stored in the memory of the unit. The bar code reader 16 may be any conventional device known by a person skilled in the art, but has to be related to the power level available.

Consequently an electronic price label 10 according to this system does not need any particular address related to the central processor which only transfers the needed data-base to all such units and without directing any specific unit address. In the embodiment shown in figs 1a and 1b the unit is provided with a receiver 20 for IR communication as well as a transmitter 21 for IR communication. The unit is also provided with an optional solar cell 22 for power to the unit. The specific unit property is set forth by the code read from the actual present label 12, in the example the label presenting a picture of green apples.

In the exemplifying embodiment the static information stating the unit property is read optically by a conventional bar code scanner 16 but any other type of one-dimensional camera may be used for reading the static information off a label. Preferably the display 11 is a LCD screen. In an alternative embodiment a number of such price labels are gathered into a larger panel, which for example gives a customer information of the present available fruits in the supermarket or the present available milk products etc. Such a larger panel will conveniently be powered from the electric lines, but does still need no cabling for the transfer of the data-base, i.e., price information. Immediately when a label containing the static information 14 is moved or changed the corresponding actual price information will be displayed and a central change of prices by the central computer system is still possible at any time.

In the exemplifying embodiment the static information on the label defining the product is normally containing a specific tag. If a label lacking this tag is instead inserted, a special response is activated and visualized by the display. In this case special information data, if available, to be used by the staff working with the particular merchandise will be presented on the actual display.

## Claims

1. A method for providing an electronic price unit (10) with an address or an article information, characterised by the steps of
- providing the unit (10) with a label (12) or a corresponding item which on its back side has static information (14) representing an address or an article information
- providing within said unit (10) a reading means (16) for reading said address or article information;
- automatically reading said address or article information (14) from said label (12) back side by said reading means (16).

2. The method according to claim 1, characterised by the further step of
- providing a memory for storing said address or article information.

3. The method according to claim 1 or 2, characterised by the further steps of
- providing a memory for storing information provided from a remote data base
- mapping said address or article information against the information stored in said memory so as to display at least part of the information corresponding to said address or article information.

4. An electronic price unit (10), characterised by
- a label (12) or a corresponding item which on its back side has a static information (14) representing an address or an article information
- reading means (16) within said unit (10) for reading said address or article information, said reading means (16) automatically reading said address or article information (14)) from said label (12) back side.

5. The electronic price unit according to claim 4, characterised by
- a memory for storing said address or article information.

6. The electronic price unit according to claim 4 or 5, characterised in that
- said reading means (16) is a one dimensional camera.

7. The electronic price unit according to claims 4-6, characterised in that
- a memory is provided for storing information provided from a remote data base
- said address or article information is mapped against the information stored in said memory so as to display at least part of the information corresponding to said address or article information.

8. A system for electronic information presentation, said system comprising electronic price units (10), characterised in that each of said electronic price units(10) is provided with
- a label (12) or a corresponding item which on its back side has a static information (14) representing an address or an article information
- reading means (16) within said unit (10) for reading said address or article information, said reading means (16) automatically reading said address or article information (14)) from said label (12) back side.

9. The system according to claim 8, characterised in that
- each said electronic price unit (10) comprises a memory for storing said address or article information.

10. The system according to claim 8 or 9, characterised in that
- said reading means (16) is a one dimensional camera.

11. The system according to claims 8-10, characterised in that
- a memory is provided for storing information provided from a remote data base
- said address or article information is mapped against the information stored in said memory so as to display at least part of the information corresponding to said address or article information.

## Patentansprüche

1. Verfahren zum Bereitstellen einer Adressen- oder Artikelinformation an eine elektronische Preiseinheit (10), gekennzeichnet durch die Schritte:
- Versehen der Einheit (10) mit einem Label (12) oder einem entsprechenden Schild, das auf seiner Rückseite statische Informationen (14) aufweist, die eine Adressen- oder eine Artikelinformation wiedergeben,
- Vorsehen eines Lesemittels (16) innerhalb der Einheit (10) zum Lesen der Adressen- oder Artikelinformation,
- automatisches Lesen der Adressen- oder Artikelinformation (14) von der Rückseite des Labels (12) mit dem Lesemittel (16).

2. Verfahren nach Anspruch 1, gekennzeichnet durch den weiteren Schritt:
- Bereitstellen eines Speichers zum Speichern der Adressen- oder Artikelinformation.

3. Verfahren nach Anspruch 1 oder 2, gekennzeichnet durch die weiteren Schritte:
- Bereitstellen eines Speichers zum Speichern von Informationen, die von einer entfernten Datenbasis bereitgestellt werden,
- Verknüpfen der Adressen- oder Artikelinformation mit den in dem Speicher gespeicherten Daten, um mindestens einen Teil der Informationen anzuzeigen, die der Adressen- oder Artikelinformation entsprechen.

4. Elektronische Preiseinheit (10), gekennzeichnet durch
- ein Label (12) oder ein entsprechendes Schild, das auf seiner Rückseite statische Informationen (14) trägt, welche eine Adressen- oder Artikelinformation wiedergeben,
- ein Lesemittel (16) innerhalb der Einheit (10) zum Lesen der Adressen- oder Artikelsinformation, wobei das Lesemittel (16) die Adressen- oder Artikelinformation (14) automatisch von der Rückseite des Labels (12) liest.

5. Elektronsiche Preiseinheit nach Anspruch 4, gekennzeichnet durch
- einen Speicher zum Speichern der Adressen- oder Artikelinformation.

6. Elektronische Preiseinheit nach Anspruch 4 oder 5, dadurch gekennzeichnet, daß
- das Lesemittel (16) eine eindimensionale Kamera ist.

7. Elektronische Preiseinheit nach den Ansprüchen 4 bis 6, dadurch gekennzeichnet, daß
- ein Speicher vorgesehen ist zum Speichern von Informationen, die von einer entfernten Datenbasis bereitgestellt werden,
- die Adressen- oder Artikelinformation mit den Informationen verknüpft wird, die in dem Speicher gespeichert sind, um mindestens einen Teil der Informationen anzuzeigen, die der Adressen- oder Artikelinformation entsprechen.

8. System zur elektronischen Wiedergeben von Informationen, wobei das System elektronische Preiseinheiten (10) aufweist, dadurch gekennzeichnet, daß jede der elektronischen Preiseinheiten (10) versehen ist mit:
- einem Label (12) oder einem entsprechenden Schild, das auf seiner Rückseite statische Informationen (14) aufweist, die eine Adressen- oder Artikelinformation wiedergeben,
- einem Lesemittel (16) in der Einheit (10) zum Lesen der Adressen- oder Artikelinformation, wobei das Lesemittel (16) die Adressen- oder Artikelinformation (14) automatisch von der Rückseite des Labels (12) liest.

9. System nach Anspruch 8, dadurch gekennzeichnet, daß
- jede der elektronischen Preiseinheiten (10) einen Speicher zum Speichern der Adressen- oder Artikelinformation aufweist.

10. System nach Anspruch 8 oder 9, dadurch gekennzeichnet, daß
- das Lesemittel (16) eine eindimensionale Kamera ist.

11. System nach den Ansprüchen 8 bis 10, dadurch gekennzeichnet, daß
- ein Speicher zum Speichern von Informationen vorgesehen ist, die von einer entfernten Datenbasis bereitgestellt werden,
- die Adressen- oder Artikelinformation mit den Informationen verknüpft wird, die in dem Speicher gespeichert sind, um wenigstens einen Teil der Informationen anzuzeigen, die der Adressen- oder Artikelinformation entsprechen.

## Revendications

1. Procédé permettant de fournir, à une unité de prix électronique (10), une adresse ou une information sur un article, caractérisé par les étapes consistant à :
- fournir, à l'unité (10), une étiquette (12) ou un élément correspondant qui porte, sur l'envers, des informations statiques (14) représentant une adresse ou une information sur l'article ;
- prévoir, à l'intérieur de ladite unité (10), un moyen de lecture (16), permettant de lire ladite adresse ou ladite information sur l'article ;
- exécuter, par ledit moyen de lecture (16), la lecture automatique de ladite adresse ou de ladite information sur l'article (14), sur l'envers de ladite étiquette (12).

2. Procédé selon la revendication 1, caractérisé par l'étape supplémentaire consistant à :
- prévoir une mémoire pour conserver ladite adresse ou ladite information sur l'article.

3. Procédé selon la revendication 1 ou 2, caractérisé par les étapes supplémentaires consistant à :
- prévoir une mémoire pour conserver des informations provenant d'une base de données à distance ;
- mettre en correspondance ladite adresse ou ladite information sur l'article avec les informations conservées dans ladite mémoire, de manière à afficher au moins une partie des informations correspondant à ladite adresse ou à ladite information sur l'article.

4. Unité de prix électronique (10), caractérisée par :
- une étiquette (12) ou un élément correspondant qui porte, sur l'envers, des informations statiques (14) représentant une adresse ou une information sur l'article ;
- un moyen de lecture (16), placé à l'intérieur de ladite unité (10) et permettant de lire ladite adresse ou ladite information sur l'article, ledit moyen de lecture (16) lisant automatiquement ladite adresse ou ladite information sur l'article (14), sur l'envers de ladite étiquette (12).

5. Unité de prix électronique selon la revendication 4, caractérisée par :
- une mémoire pour conserver ladite adresse ou ladite information sur l'article.

6. Unité de prix électronique selon la revendication 4 ou 5, caractérisée en ce que :
- ledit moyen de lecture (16) est une caméra unidimensionnelle.

7. Unité de prix électronique selon les revendications 4 à 6, caractérisée en ce que :
- une mémoire est prévue pour conserver des informations provenant d'une base de données à distance ; et en ce que
- ladite adresse ou ladite information sur l'article est mise en correspondance avec les informations conservées dans ladite mémoire, de manière à afficher au moins une partie des informations correspondant à ladite adresse ou à ladite information sur l'article.

8. Système de présentation d'information électronique, ledit système comprenant des unités de prix électroniques (10), caractérisé en ce que chacune desdites unités de prix électroniques (10) est pourvue :
- d'une étiquette (12) ou un d'élément correspondant qui porte, sur l'envers, des informations statiques (14) représentant une adresse ou une information sur l'article ;
- d'un moyen de lecture (16), placé à l'intérieur de ladite unité (10) et permettant de lire ladite adresse ou ladite information sur l'article, ledit moyen de lecture (16) lisant automatiquement ladite adresse ou ladite information sur l'article (14), sur l'envers de ladite étiquette (12).

9. Système selon la revendication 8, caractérisé en ce que :
- chaque unité de prix électronique (10) comprend une mémoire pour conserver ladite adresse ou ladite information sur l'article.

10. Système selon la revendication 8 ou 9, caractérisé en ce que :
- ledit moyen de lecture (16) est une caméra unidimensionnelle.

11. Système selon les revendications 8 à 10, caractérisé en ce que :
- une mémoire est prévue pour conserver des informations provenant d'une base de données à distance ; et en ce que
- ladite adresse ou ladite information sur l'article est mise en correspondance avec les informations conservées dans ladite mémoire, de manière à afficher au moins une partie des informations correspondant à ladite adresse ou à ladite information sur l'article.
